# EUROPÄISCHE PATENTANMELDUNG

(11) **EP 3 246 808 A1**
(43) Veröffentlichungstag der Anmeldung: **22.11.2017**
(21) Anmeldenummer: 16170371.5
(22) Anmeldetag: 19.05.2016
(51) Int. Cl.: G06F 3/0488

(54) **BEDIEN- UND BEOBACHTUNGSGERÄT UND VERFAHREN ZUM BETRIEB**

(71) Anmelder: Siemens Aktiengesellschaft, 80333 München (DE)
(72) Erfinder: Wolf, Rene, 90475 Nürnberg (DE); Steinhorst, Andreas, 95369 Untersteinach (DE); Zintel, Andreas, 91126 Schwabach (DE)

(57) **Zusammenfassung**

Die Erfindung betrifft ein Bedien- und Beobachtungsgerät (1) mit einem Bildschirm (2) zum Darstellen von Beobachtungsobjekten (21) und Bedienobjekten (B1,B2,B3,B4), wobei ein Mittel (5) zur Erkennung eines Raumpunktes (P) eines sich an den Bildschirm (2) annähernden Bediengegenstandes (3), wobei der Bildschirm (2) durch ein Koordinatensystem (4) in Annäherungsfelder (AFᵢₖ) unterteilt ist und zumindest einigen Annäherungsfeldern (AFᵢₖ) zumindest ein Bedienobjekt (B1,B2,B3, B4) zugeordnet ist, und weiterhin eine Auswerteeinheit (6) vorhanden ist, welche ausgestaltet ist Koordinaten (r,θ,ϕ) eines erkannten Raumpunktes (P) auf Koordinaten (x,y) der Annäherungsfelder (AFᵢₖ) umzurechnen und damit ein Annährungsfeld (AFᵢₖ) zu ermitteln, wobei Mittel vorhanden sind, die das dem ermittelten Annäherungsfeld (AFᵢₖ) zugeordnete Bedienobjekt (B1,B2,B3,B4) sichtbar schalten.

## Beschreibung

Die Erfindung betrifft ein Bedien- und Beobachtungsgerät mit einem Bildschirm zum Darstellen von Beobachtungsobjekten und Bedienobjekten.

Weiterhin betrifft die Erfindung ein Verfahren zum Betrieb eines Bedien- und Beobachtungsgerätes, wobei auf dem Bildschirm Beobachtungsobjekte angezeigt werden.

Eine grafische Oberfläche von Bedien- und Beobachtungsgeräten, insbesondere im industriellen Automatisierungsumfeld, muss so gestaltet werden, dass ein Bedienen und Beobachten ermöglicht wird. Hierfür werden Bedienobjekte (Schaltflächen, Schalter, etc.) und Beobachtungsobjekte (Trendanzeigen, Werteanzeigen, etc.) auf dem Bildschirm platziert. Da eine Fläche des Bildschirmes begrenzt ist werden die Bedienobjekte oft sehr klein dargestellt. So kann eine sehr gute Übersicht über eine gesamte Anlage realisiert werden und die Bedienobjekte "Stören" nicht beim Beobachten aus der Ferne. Kleine Bedienobjekte können jedoch beispielsweise auf Touch-Geräten, nur sehr schlecht bedient werden.

Nach dem derzeit bekannten Stand der Technik wird dieses Problem durch Zoomen der grafischen Oberfläche gelöst. Hierfür ist es nötig, manuell über vordefinierte Gesten, beispielsweise Zwei-Finger-Pinch, das angezeigte Bild auf die nötige Bediengröße zu ändern. Dieser manuelle Prozess muss allerdings durch einen Bediener durchgeführt werden. Nach der Bedienung der Bedienobjekte muss das Bild wieder verkleinert werden, um die Übersichtlichkeit wieder herzustellen. Hierfür ist wiederum eine weitere manuelle Aktion des Bedieners nötig.

Es ist Aufgabe der vorliegenden Erfindung ein Bedien- und Beobachtungsgerät bzw. ein Verfahren bereitzustellen, bei welchem es den Bediener erleichtert wird, eine Bedienung durchzuführen, aber dennoch die Bildschirmfläche für Beobachtungsobjekte voll ausgenutzt werden kann.

Die Aufgabe wird bei einem Bedien- und Beobachtungsgerät mit einem Bildschirm zum darstellen von Beobachtungsobjekten und Bedienobjekten dadurch gelöst, dass ein Mittel zur Erkennung eines Raumpunktes eines sich an den Bildschirm annähernden Bediengegenstandes vorhanden ist, wobei der Bildschirm durch ein Koordinatensystem in Annäherungsfelder unterteilt ist und zumindest einigen Annäherungsfeldern zumindest ein Bedienobjekt zugeordnet ist, und weiterhin eine Auswerteeinheit vorhanden ist, welche ausgestaltet ist Koordinaten eines erkannten Raumpunktes auf Koordinaten der Annäherungsfelder umzurechnen und damit ein Annäherungsfeld zu ermitteln, wobei Mittel vorhanden sind, die das dem ermittelten Annäherungsfeld zugeordnete Bedienobjekt sichtbar schalten. Mit dem Koordinatensystem und den darin aufgeteilten Annäherungsfeldern wird quasi ein Raster geschaffen, welches über eine komplette grafische Projektierungsfläche des Bedien- und Beobachtungsgerätes gelegt wird. Über diesem Raster entstehen damit Zonen, welche deckungsgleich mit dem Raster bzw. mit den einzelnen Annäherungsfeldern sind. Wird in den Bereich einer solchen Zone mit einem Bediengegenstand, beispielsweise mit einem Zeigefinger der menschlichen Hand, eingedrungen, so kann ein Mittel zur Erkennung eines Raumpunktes den sich den Bildschirm nähernden Finger erkennen und eine Position des Fingers ermitteln.

Diese ermittelte Position des Raumpunktes liegt beispielsweise in Kugelkoordinaten vor. Diese Kugelkoordinaten können durch eine Umrechnung in kartesische Koordinaten gewandelt werden. Diesen kartesischen Koordinaten kann wiederum durch eine Indizierung jeweils ein Annäherungsfeld zugeordnet werden. Beim Projektieren mittels einer Bedien- und Beobachtungssoftware für das Bedien- und Beobachtungsgerät kann nun von einem Projekteur ein Bereich und eine Aktion für diesen Bereich festgelegt werden. Für die spezifizierten Bereiche werden nun zugeordnete Bedienobjekte eingeblendet, wenn die Position des erkannten Zeigefingers mit der Position der kartesischen Koordinaten der Annäherungsfelder übereinstimmt. Nach einer weiteren Ausgestaltung ist vorgesehen, dass das Mittel zur Erkennung eines Raumpunktes weiterhin ausgestaltet ist, einen Abstand des Bediengegenstandes zum Bildschirm zu ermitteln und die Auswerteeinheit weiterhin ausgestaltet ist, den ermittelten Abstand mit einem vorgebbaren Abstandswert zu vergleichen und wenn der Abstand den vorgebbaren Abstandswert unterschritten hat ein Freigabesignal zu erzeugen. Jedes projektierte Bedienobjekt kann nun einen Freigabeeingang aufweisen und nur wenn das Freigabesignal vorliegt und der zugehörige Raumpunkt bzw. die zugehörigen Koordinaten mit den zugehörigen Annäherungsfeldern übereinstimmen, wird das Bedienobjekt eingeblendet.

In einer vorteilhaften Ausgestaltung umfasst das Mittel zur Erkennung des Raumpunktes eine Stereokamera.

Bei einem Verfahren zum Betrieb eines Bedien- und Beobachtungsgerätes, wobei auf einen Bildschirm Beobachtungsobjekte angezeigt werden, wird die eingangs genannte Aufgabe durch folgende Schritte gelöst:
a) Unterteilen des Bildschirms in Annäherungsfelder mittels eines Koordinatensystems,
b) Zuordnen von Bedienobjekten zu den Annäherungsfeldern,
c) Ermitteln eines Raumpunktes eines sich dem Bildschirm nähernden Bediengegenstandes,
d) Umrechnen von Koordinaten des ermittelten Raumpunktes auf Koordinaten eines Annäherungsfeldes, wobei mittels der Koordinaten des Annäherungsfeldes das Bedienobjekt bestimmt wird,
e) sichtbar Schalten des dem ermittelten Annäherungsfeld zugeordneten Bedienobjektes.

Mit Vorteil wird bei dem Verfahren ein Abstand des Bediengegenstandes zum Bildschirm ermittelt und der ermittelte Abstand wird mit einem vorgegebenen Abstandswert verglichen und für den Fall, dass der Abstand den vorgegebenen Abstandswert unterschritten hat, wird ein Freigabesignal erzeugt, wobei das Freigabesignal für eine Freigabe sichtbar Schaltens des Bedienobjektes verwendet wird.

Zusammenfassend kann gesagt werden, dass das Bedien- und Beobachtungsgerät nun über die Möglichkeit verfügt, die Annäherung des Bediengegenstandes zu erkennen und zusätzlich auch noch den Ort des angenäherten Bediengegenstandes zu ermitteln. Für diesen ermittelten Ort bzw. für die ermittelte Zone in dem sich der Bediengegenstand befindet kann nun ein Projekteur der Bedien- und Beobachtungsgrafischen Oberfläche folgende Verhaltensweisen im Vorfeld festlegen: Das sich die grafische Oberfläche des Bedien- und Beobachtungsgerätes blendet automatisch bei Annäherung die für den spezifischen Bereich nötigen Bedienobjekte ein. Entfernt sich der Bediengegenstand wieder, so werden die Bedienobjekte wieder ausgeblendet und nur noch die Beobachtungsobjekte sind sichtbar. Ab einer gewissen Nähe zum Bildschirm wird automatisch die komplette grafische Oberfläche vergrößert, so dass eine Bedienung möglich ist. Entfernt sich der Bediengegenstand wieder, so wird die grafische Oberfläche wieder auf das ursprüngliche Niveau verkleinert. Auch könnte er festlegen, dass sich ab einer gewissen Nähe kontextbezogene Informationen einblenden, die zuvor nicht sichtbar waren. Diese verschwinden wieder bei Entfernung des Bediengegenstandes.

Die Zeichnung zeigt ein Ausführungsbeispiel der Erfindung. Es zeigen
- FIG 1: das prinzipielle Einblenden eines Bedienobjektes bei Annäherung eines Bediengegenstandes,
- FIG 2: eine Unterteilung eines Bildschirmes des Bedien-und Beobachtungsgerät in Annäherungsfelder mit Hilfe eines Koordinatensystems,
- FIG 3: das Prinzip der Ermittlung eines Raumpunktes,

- FIG 4: prinzipielles Einblenden von Bedienobjekten in eine grafische Anzeige und
- FIG 5: ein Bedien- und Beobachtungsgerät.

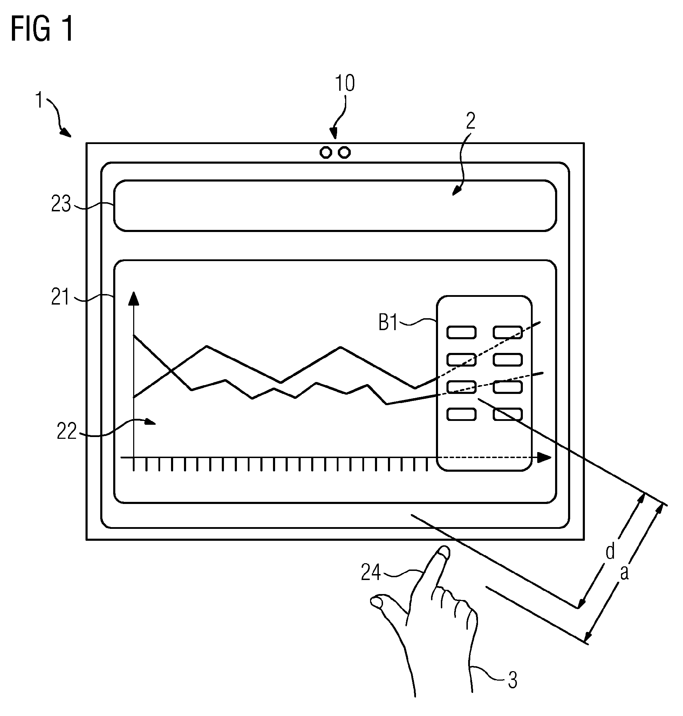

Gemäß der FIG 1 ist ein Bedien- und Beobachtungsgerät 1 mit einem Bildschirm 2 zum Darstellen von Beobachtungsobjekten 21 dargestellt. Das Beobachtungsobjekt 21 weist eine grafische Anzeige 22 auf. Oberhalb des Beobachtungsobjektes 21 ist eine Statusleiste 23 projektiert und dargestellt. Für die Erkennung eines sich annähernden Bediengegenstandes 3, hier der Zeigefinger einer menschlichen Hand 24, weist das Bedien- und Beobachtungsgerät 1 eine Stereokamera 10 mit entsprechender Auswerteeinheit 6 auf. Die Stereokamera 10 erfasst den Zeigefinger der menschlichen Hand 24 und kann für die Spitze des Zeigefingers ein Raumpunkt P ermitteln. Unterschreitet der Abstand des Zeigefingers der menschlichen Hand 24 einen vorgebbaren Abstandswert a so wird ein erstes Bedienobjekt B1 sichtbar. Das erste Bedienobjekt B1 wird über die grafische Anzeige 22 dargestellt und verdeckt diese. In dem ersten Bedienobjekt B1 befinden sich weitere Bedienschalter, welche groß genug dargestellt sind, damit einen Bediener die Eingabe nun erleichtert wird.

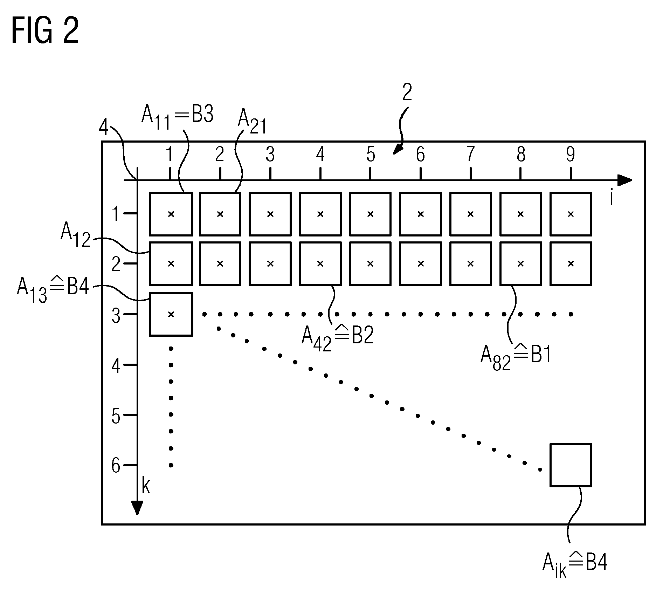

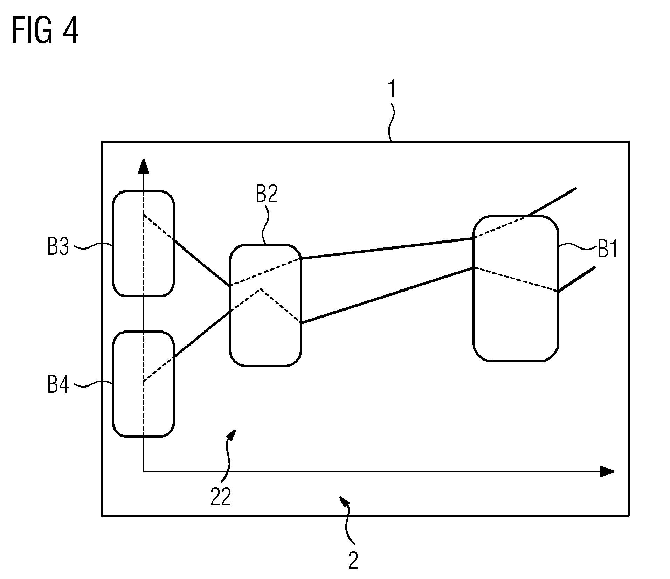

Da der Bildschirm 2 durch ein Koordinatensystem 4 in Annäherungsfelder AFᵢₖ (siehe FIG 2) unterteilt ist, und zumindest einigen Annäherungsfeldern AFᵢₖ zumindest ein Bedienobjekt B1,B2,B3,B4 (siehe FIG 4) zugeordnet ist, und weiterhin eine Auswerteeinheit 6 vorhanden ist, welche ausgestaltet ist, Koordinaten r,θ,ϕ eines erkannten Raumpunktes P auf Koordinaten x,y bzw. xᵢ,yₖ der Annäherungsfelder AFᵢₖ umzurechnen und damit ein Annäherungsfeld AFᵢₖ zu ermitteln, wobei weiterhin Mittel vorhanden sind, insbesondere Software, welche das dem ermittelten Annäherungsfeld AFᵢₖ zugeordnete Bedienobjekt B1,B2,B3,B4 sichtbar schalten.

Mit der FIG 2 ist die Unterteilung des Bildschirmes in Annäherungsfelder AFᵢₖ mit Hilfe des Koordinatensystems 4 dargestellt. Das Koordinatensystem 4 ist ein kartesisches Koordinatensystem mit einer x-Komponente und einer y-Komponente. Auf der x-Komponente des Koordinatensystems 4 ist der fortlaufende Index i aufgetragen und auf der y-Komponente des Koordinatensystems 4 ist der fortlaufende Index k aufgetragen. Demnach wird ausgehend von einer Position 1/1 ein erstes Annäherungsfeld A₁₁ platziert daran anschließend ein zweites Annäherungsfeld A₂₁ und daran anschließend wiederum ein drittes Annäherungsfeld A₃₁ usw.. Dies gilt für eine zeilenmäßige bzw. spaltenmäßige Unterteilung des Bildschirms 2. Mit den Annäherungsfeldern AFᵢₖ wird ein Raster über den Bildschirm 2 gelegt. Durch dieses geschaffene Raster können den Annäherungsfeldern AFᵢₖ entsprechende Bedienobjekte B1,B2,B3,B4 in einer Projektierungssoftware für das Bedien- und Beobachtungsgerät 1 zugeordnet werden.

Gemäß FIG 2 ist dem Annäherungsfeld A₈₂ ein erstes Bedienobjekt B1 zugeordnet, dem Annäherungsfeld A₄₂ ist ein zweites Bedienobjekt B2 zugeordnet, dem ersten Annäherungsobjekt A₁₁ ist ein drittes Bedienobjekt B3 zugeordnet und einem neunzehnten Annäherungsfeld A₁₃ ist ein viertes Bedienobjekt B4 zugeordnet.

Würde sich nun ein Bediengegenstand 3, quasi schwebend über den Bildschirm 2 bewegen und in die Zone eines Annäherungsfeldes AFᵢₖ geraten, wobei der Abstand d zu den Bildschirm 2 einen Mindestabstand unterschritten hat, so wird das dem Annäherungsfeld AFᵢₖ zugeordnet Bedienobjekt B1,B2,B3,B4 eingeblendet. Schwebt der Bediengegenstand beispielsweise über der Position i = 1 und k = 3, so befindet sich der Bediengegenstand 3 über dem Annäherungsfeld A₁₃ und da das Annäherungsfeld A₁₃ in der Projektierungssoftware des Bedien- und Beobachtungsgerätes 1 mit dem vierten Bedienobjekt B4 verknüpft ist, wird das vierte Bedienobjekt B4 sichtbar geschaltet und überblendet quasi das in FIG 1 gezeigte Beobachtungsobjekt 21 mit der darin enthaltenen grafischen Anzeige 22. In diesem "aufgepoppten" Bedienobjekt B1,B2,B3,B4 kann nun ein Bediener erleichtert Bedieneingaben machen.

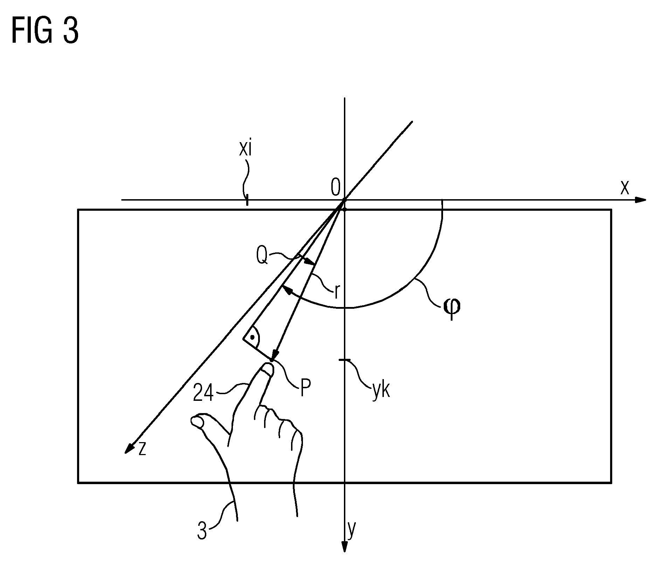

Mit der FIG 3 wird aufgezeigt, wie Koordinaten r,θ,ϕ eines erkannten Raumpunktes P auf Koordinaten x,y des Koordinatensystems 4 umgerechnet werden. Die Koordinaten r,θ,ϕ des Raumpunktes P liegen als Kugelkoordinaten oder räumliche Polarkoordinaten vor. Hiermit wird ein Punkt im Raum durch seinen Abstand vom Ursprung und zwei Winkel angegeben. Der Raumpunkt P wird wie folgt festgelegt. r ist der Abstand des Punktes P von O, hiermit wird eine Kugeloberfläche festgelegt, auf der sich der Raumpunkt P befindet. Der Polarwinkel θ oder Poldistanzwinkel, ist der Winkel zwischen der Polrichtung und der Strecke OP. ϕ, der Azimutwinkel, ist der Winkel zwischen der Bezugsrichtung und der Orthogonalprojektion der Strecke OP, gezählt von -Π bis Π.

Da das Mittel 5 zur Erkennung eines Raumpunktes P nun den Raumpunkt P erfasst hat, liegen in diesen Mittel 5 die Koordinaten des Raumpunktes P als Kugelkoordinaten vor. Nun können mit einer Auswerteeinheit 6 die Kugelkoordinaten in kartesische Koordinaten x, y, bzw. xᵢ, yₖ umgerechnet werden. Diese umgerechneten kartesischen Koordinaten können wiederum im Zusammenhang mit dem in den Koordinatensystem 4 (siehe FIG 2) angeordneten Annäherungsfeldern AFᵢₖ gebracht werden. Da den Annäherungsfeldern AFᵢₖ Bedienobjekte B1,B2,B3,B4 zugeordnet sind, können diese entsprechend ein- oder ausgeblendet werden.

Die FIG 4 zeigt beispielsweise eine Einblendung aller Bedienobjekte B1,B2,B3,B4 zu Testzwecken. Ohne das sich nun ein Bediengegenstand dem jeweils zugeordneten Annäherungsfeldern AFᵢₖ angenähert hat, werden die Bedienobjekte B1,B2,B3,B4 über die grafische Anzeige 22 geblendet und damit angezeigt.

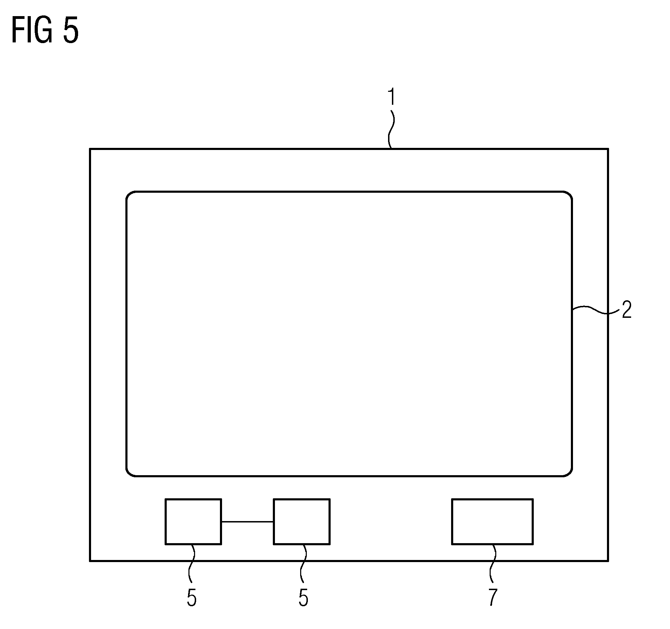

Die FIG 5 zeigt ein Bedien- und Beobachtungsgerät 1 mit einem Bildschirm 2, welcher in der Regel als ein Touch-Screen-Display ausgestaltet ist. Ein Mittel 5 zur Erkennung eines Raumpunktes P eines sich an den Bildschirm 2 annähernden Bediengegenstandes arbeitet mit einer Auswerteeinheit 6 zusammen, wobei die Auswerteeinheit 6 ausgestaltet ist, Koordinaten r,θ,ϕ des erkannten Raumpunktes P auf Koordinaten x,y der Annäherungsfelder AFᵢₖ umzurechnen und damit ein Annäherungsfeld AFᵢₖ zu ermitteln, wobei das dem ermittelten Annäherungsfeld AFᵢₖ zugeordnete Bedienfeld B1,B2,B3,B4 sichtbar geschaltet wird.

## Patentansprüche

1. Bedien- und Beobachtungsgerät (1) mit einem Bildschirm (2) zum Darstellen von Beobachtungsobjekten (21) und Bedienobjekten (B1,B2,B3,B4), **gekennzeichnet durch** ein Mittel (5) zur Erkennung eines Raumpunktes (P) eines sich an den Bildschirm (2) annähernden Bediengegenstandes (3), wobei der Bildschirm (2) **durch** ein Koordinatensystem (4) in Annäherungsfelder (AFᵢₖ) unterteilt ist und zumindest einigen Annäherungsfeldern (AFᵢₖ) zumindest ein Bedienobjekt (B1,B2,B3, B4) zugeordnet ist, und weiterhin eine Auswerteeinheit (6) vorhanden ist, welche ausgestaltet ist Koordinaten (r,θ,ϕ) eines erkannten Raumpunktes (P) auf Koordinaten (x,y) der Annäherungsfelder (AFᵢₖ) umzurechnen und damit ein Annährungsfeld (AFᵢₖ) zu ermitteln, wobei Mittel vorhanden sind, die das dem ermittelten Annäherungsfeld (AFᵢₖ) zugeordnete Bedienobjekt (B1,B2,B3,B4) sichtbar schalten.

2. Bedien- und Beobachtungsgerät (1) nach Anspruch 1, wobei das Mittel (5) zur Erkennung eines Raumpunktes (P) weiterhin ausgestaltet ist einen Abstand (d) des Bediengegenstandes (3) zum Bildschirm (2) zu ermitteln und die Auswerteeinheit (6) weiterhin ausgestaltet ist den ermittelten Abstand (d) mit einem vorgebbaren Abstandswert (a) zu vergleichen und wenn der Abstand (d) den vorgebbaren Abstandswert (a) unterschritten hat ein Freigabesignal (S) zu erzeugen.

3. Bedien- und Beobachtungsgerät (1) nach Anspruch 1 oder 2, wobei die Mittel (5) zur Erkennung des Raumpunktes (P) eine Stereokamera (10) umfassen.

4. Verfahren zum Betrieb eines Bedien- und Beobachtungsgerätes (1), wobei auf einem Bildschirm (2) Beobachtungsobjekte (21) angezeigt werden, **gekennzeichnet durch** folgende Schritte:
a) Unterteilen des Bildschirms (2) in Annäherungsfelder (AFᵢₖ) mittels eines Koordinatensystems (4),
b) Zuordnen von Bedienobjekten (B1,B2,B3,B4) zu den Annäherungsfeldern (AFᵢₖ),
c) Ermitteln eines Raumpunktes (P) eines sich dem Bildschirm (2) nähernden Bediengegenstandes (3),
d) Umrechnen von Koordinaten (r,θ,ϕ) des ermittelten Raumpunktes (P) auf Koordinaten (x,y) eines Annäherungsfeldes (AFᵢₖ), wobei mittels der Koordinaten (x,y) des Annäherungsfeldes (AFᵢₖ) das Bedienobjekt (B1,B2,B3,B4) bestimmt wird,
e) sichtbar Schalten des dem ermittelten Annäherungsfeld (AFᵢₖ) zugeordneten Bedienobjektes (B1,B2,B3,B4).

5. Verfahren nach Anspruch 4, wobei ein Abstand (d) des Bediengegenstandes (3) zum Bildschirm (2) ermittelt wird und der ermittelte Abstand (d) mit einem vorgegebenen Abstandswert (a) verglichen wird und für den Fall, dass der Abstand (d) den vorgegebenen Abstandswert (a) unterschritten hat, wird ein Freigabesignal (S) erzeugt, wobei das Freigabesignal (S) für eine Freigabe des sichtbar Schaltens des Bedienobjektes (B1,B2,B3,B4) verwendet wird.
